# EUROPEAN PATENT APPLICATION

(11) **EP 1 359 195 A1**
(43) Date of publication of application: **05.11.2003**
(21) Application number: 01983825.9
(22) Date of filing: 20.11.2001
(51) Int. Cl.: C08L 69/00, C08G 64/16, C08K 5/524

(54) **AROMATIC-ALIPHATIC COPOLYCARBONATE RESIN COMPOSITION**

(30) Priority: 21.11.2000 JP 2000353675
(71) Applicant: MITSUBISHI GAS CHEMICAL COMPANY, INC., Chiyoda-ku, Tokyo 100-8324 (JP)
(72) Inventor: NAGAI, Satoshi, c/o Mitsubishi Gas Chemical Co Inc, Kashima-gun, Ibaraki 300-4247 (JP); ISAHAYA, Yoshinori, Mitsubishi Gas Chemical Co Inc, Kashima-gun, Ibaraki 300-4247 (JP); SASAKI, Makoto, c/o Mitsubishi Gas Chemical Co Inc, Kashima-gun, Ibaraki 300-4247 (JP); TSUNODA, Takashi, Mitsubishi Gas Chemical Co Inc, Yokkaichi-shi, Mie 510-0886 (JP)
(74) Representative: HOFFMANN - EITLE
(86) International application number: JP0110132
(87) International publication number: WO02042375

(57) **Abstract**

Aromatic-aliphatic copolycarbonate resin composition obtained by compounding 0.001 to 0.5 part by weight of a benzotriazole ultraviolet absorbent and 0.005 to 0.1 part by weight of a phosphorus antioxidant having a specified structure per 100 parts by weight of an aromatic-aliphatic copolycarbonate resin. A polycarbonate resin composition according to the present invention cuts ultraviolet rays efficiently, shows excellent color tone and melt stability, and shows extremely little coloration at the time of molding.

## Description

### Technical Field

The present invention relates to a polycarbonate resin composition that has good color tone and undergoes less discoloration and less reduction in molecular weight at the time of heating during production of the resin, molding, extrusion processing, and the like.

### Background art

Polycarbonate resins have excellent mechanical strength such as impact resistance. In addition, they have excellent heat resistance and transparency, so that they are utilized as optical materials for various lenses, prisms, optical disk substrates, and the like.

Among them, aromatic-aliphatic copolycarbonate resins have features such as lower photo-elastic constants and higher inverse dispersion values than aromatic polycarbonate resins, so that they can be widely used as optical materials.

However, the above-mentioned aromatic-aliphatic copolycarbonate resins have higher light transmission in the ultraviolet region than aromatic polycarbonate resins. So, when they are used for spectacle lenses, it is usually preferable to decrease the light transmission in the ultraviolet region. An ultraviolet absorbent is generally added to the resins. However, it often causes degradation of the color tone of the resin or reduction in the retention stability of the resin so that these resins have been difficult to use in the field of optical lenses where primary importance is attached to the appearance thereof.

### Disclosure of the Invention

An object of the present invention is to provide an aromatic-aliphatic copolycarbonate resin composition, that cuts ultraviolet rays efficiently, that has excellent color tone and melt stability and shows little coloration at the time of molding.

The inventors of the present invention have made extensive studies on a method for overcoming the above-mentioned defects. As a result, they have found that a polycarbonate resin composition obtained by compounding 0.005 to 0.1 part by weight of a phosphorus antioxidant having a specified structure at the time of adding 0.001 to 0.5 part by weight of a benzotriazole ultraviolet absorbent to 100 parts by weight of an aromatic-aliphatic copolycarbonate not only transmits substantially no ultraviolet rays but also provides a polycarbonate resin showing less coloration at the time of molding processing and which has good color tone, thereby accomplishing the present invention.

Therefore, the present invention relates to a polycarbonate resin composition that transmits substantially no ultraviolet rays, shows less coloration at the time of molding processing, and has good color tone, the composition including 0.001 to 0.5 part by weight of a benzotriazole ultraviolet absorbent and 0.005 to 0.1 part by weight of phosphorus antioxidants represented by the following formulae (1) to (3) 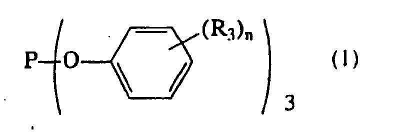 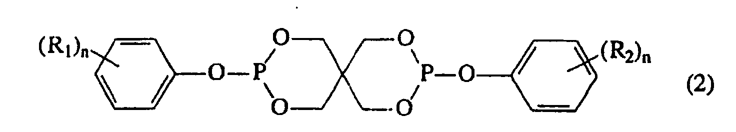 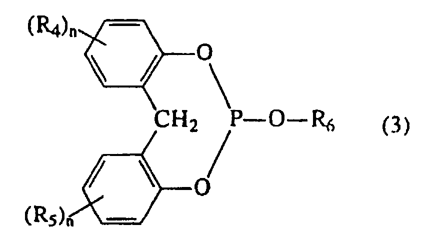 (where R₁ to R₆ represent a hydrogen atom, an alkyl group having 1 to 18 carbon atoms, or an oxyalkyl group having 1 to 18 carbon atoms, provided that R₁ to R₆ may be the same or different; and n represents the number of substituents and is an integer of 0 to 4) per 100 parts by weight of an aromatic-aliphatic copolycarbonate.

### Best Mode for carrying Out the Invention

Hereinafter, the present invention will be described in detail.

In the present invention, the aromatic-aliphatic copolycarbonate resin can be produced by copolymerizing an aromatic dihydroxy compound and an aliphatic dihydroxy compound by an ester interchange reaction by using a carbonic acid diester as a carbonate source in the presence of a basic compound or an ester interchange catalyst.

As the aromatic dihydroxy compound used in the present invention, there is used a compound represented by the following formula (4) 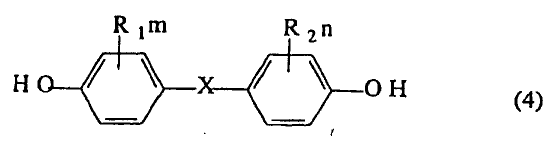 (where X is a single bond or 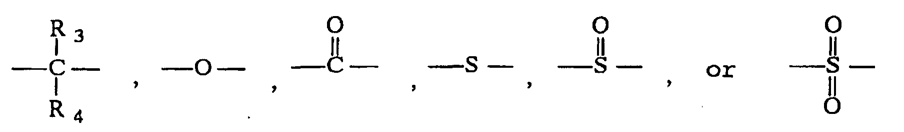 where R₃ and R₄ represent a hydrogen atom, an alkyl group having 1 to 10 carbon atoms or a phenyl group, provided that R₃ and R₄ may combine to form a ring; R₁ and R₂ represent a hydrogen atom, an alkyl group having 1 to 10 carbon atoms, or a halogen, provided that R₁ and R₂ may be the same or different; and m and n represent the number of substituents and are an integer of 0 to 4).

The aromatic dihydroxy compound represented by the general formula (4) includes, for example, bisphenols such as bis(4-hydroxyphenyl)methane, 2,2-bis(4-hydryoxyphenyl)propane, 2,2-bis(4-hydroxy-3-methylphenyl)propane, 2,2-bis(4-hydroxy-3-t-butylphenyl)propane, 2,2-bis(4-hydroxy-3,5-dimethylphenyl)propane, 2,2-bis(4-hydroxy-3,5-dibromophenyl)propane, 4,4-bis(4-hydroxyphenyl)heptane, and 1, 1-bis(4-hydroxyphenyl)cyclohexane; biphenyls such as 4,4'-dihydroxybiphenyl, and 3,3',5,5'-tetramethyl-4,4'-dihydroxybiphenyl; bis(4-hydroxyphenyl)sulfone, bis(4-hydroxyphenyl)sulfoxide, bis(4-hydroxyphenyl)sulfide, bis(4-hydroxyphenyl)ether, bis ( 4-hydroxyphenyl)ketone, and the like. Of these, in particular, 1, 1-bis(4-hydroxyphenyl) cyclohexane (hereinafter abbreviated as "BPZ") is preferable. Further, two or more of the above-mentioned aromatic dihydroxy compounds may be used in combination.

The aliphatic dihydroxy compound that can be used in the present invention includes tricyclo[5.2.1.0²⁻⁶]decanedimethanol, β, β, β', β'-tetramethyl-2,4,8,10-tetraoxaspiro[5.5]undecane-3,9-diethano 1(spiroglycol), 2,6-decalinedimethanol, 1,4-cyclohexanedimethanol, and the like. Further, two or more of the above-mentioned aliphatic dihydroxy compounds may be used in combination.

In particular, tricyclo[5.2.1.0²⁻⁶] decanedimethanol (hereinafter, abbreviated as "TCDDM") represented by the following formula (5) is preferably used.

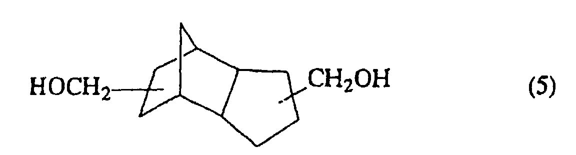

The ratio of the aromatic dihydroxy compound to the aliphatic dihydroxy compound is preferably 95/5 to 5/95 (by molar ratio), more preferably 90/10 to 10/90 (by molar ratio), in view of the balance among optical properties, heat resistance, and the like.

In the present invention, as the carbonic acid diester, diphenyl carbonate, ditolyl carbonate, bis(chlorophenyl) carbonate, m-cresyl carbonate, dinaphthyl carbonate, dimethyl carbonate, diethyl carbonate, dibutyl carbonate, dicyclohexyl carbonate, and the like can be used. Of these, in particular, diphenyl carbonate is preferable. Further, the chlorine content in diphenyl carbonate, which may also become a cause of coloration, is preferably 20 ppm or less. More preferably, it is 10 ppm or less. It is preferable that diphenyl carbonate be used in a quantity of 0.97 to 1.2 mol, particularly preferably in a quantity of 0.99 to 1.10 mol per 1 mol in total of the aromatic dihydroxy compound and the aliphatic dihydroxy compound.

In the present invention, a benzotriazole ultraviolet absorbent is added as an ultraviolet absorbent. Examples of the benzotriazole ultraviolet absorbent that is preferably used include 2-(5-methyl-2-hydroxyphenyl)benzotriazole, 2-(2-hydroxy-4-octyloxyphenyl)benzotriazole, 2-[2-hydroxy-3,5-bis(α,α'-dimethylbenzyl)phenyl]-2H-benzotriaz ole, 2-(3,5-di-t-butyl-2-hydroxyphenyl)benzotriazole, 2-(3-t-butyl-5-methyl-2-hydroxyphenyl)-5-chlorobenzotriazole, 2-(3,5-di-t-butyl-2-hydroxyphenyl)-5-chlorobenzotriazole, 2-(3,5-di-t-amyl-2-hydroxyphenyl)benzotriazole, 2-(2'-hydroxy-5'-t-octylphenyl)benzotriazole, 2-[2-hydroxy-3-(3,4,5,6-tetrahydrophthalimidomethyl)-5-methylp henyl]benzotriazole, 2,2'-methylenebis[4-(1,1,3,3-tetramethylbutyl)-6-(2H-benzotria zol-2-yl)phenol], methyl-3-[3-t-butyl-5-(2H-benzotriazol-2-yl)]-4-hydroxyphenyl] propionate-polyethyleneglycol, and the like(molecular weight about 300). In particular, 2,2'-methylenebis[4-(1,1,3,3-tetramethylbutyl)-6-(2H-benzotria zol-2-yl)phenol] is used particularly preferably. These ultraviolet absorbents may be used singly or as mixtures of two or more of them.

The addition amount of the ultraviolet absorbent used is preferably 0.001 to 0.5 part by weight, more preferably 0.01 to 0.4 part by weight, per 100 parts by weight of the aromatic-aliphatic copolycarbonate resin. If the addition amount is less than 0.001 part by weight, the desired effect cannot be obtained while if the addition amount is in excess, there occur aggravation of the hue, decrease in the heat resistance property, decrease in the mechanical property, and the like, and thus both the cases are inappropriate.

Moreover, the addition of the ultraviolet absorbent may be accompanied by addition of the phosphorus antioxidant represented by one of the above-mentioned formulae (1) to (3) to prevent discoloration at the time of heating and reduction in the molecular weight. These phosphorus antioxidants may be used singly or as mixtures of two or more of them.

Examples of the phosphorus antioxidant represented by the above-mentioned formula (1) include triphenyl phosphite, tris(4-methylphenyl) phosphite, tris(4-t-butylphenyl) phosphite, tris(2-methyl-4-ethylphenyl) phosphite, tris(2-methyl-4-t-butylphenyl) phosphite, tris(2,4-di-t-butylphenyl)phosphite, tris(2,6-di-t-butylphenyl) phosphite, tris(2,4-di-t-butyl-5-methylphenyl)phosphite, tris(mono- or di-nonylphenyl) phosphite, and the like. Examples the phosphorus antioxidant represented by the above-mentioned formula (2) include bis(monononylphenyl) pentaerythritol diphosphite, bis(2,4-di-t-butylphenyl) pentaerythritol diphosphite, bis(2,6-di-t-butyl-4-methylphenyl) pentaerythritol diphosphite, bis(2,4,6-tri-t-butylphenyl) pentaerythritol diphosphite, bis(2,4-di-t-butyl-5-methylphenyl) pentaerythritol diphosphite, and the like. Examples of the phosphorus antioxidant represented by the above-mentioned formula (3) include 2,2-methylenebis(4,6-dimethylphenyl) octyl phosphite, 2,2-methylenebis(4-t-butyl-6-methylphenyl) octyl phosphite, 2,2-methylenebis(4,6-di-t-butylphenyl) octyl phosphite, 2,2-methylenebis(4,6-dimethylphenyl) hexyl phosphite, 2,2-methylenebis (4,6-di-t-butylphenyl) hexyl phosphite, 2,2-methylenebis(4,6-di-t-butylphenyl) stearyl phosphite, and the like. One or more kinds of the antioxidant may be added.

It is preferable that the above-mentioned phosphorus antioxidants are compounded in a quantity of 0.005 to 0.1 part by weight per 100 parts by weight of the aromatic-aliphatic copolycarbonate resin. If the quantity is less than 0.005 part by weight, the desired effect cannot be obtained while if the quantity is in excess the heat resistance property and mechanical strength are decreased.

The polycarbonate resin used in the present invention has a weight average molecular weight of preferably 30,000 to 200,000, more preferably 40,000 to 120,000.

In the method for producing a polycarbonate associated with the present invention, a basic compound, an ester interchange catalyst, or the like is used as a catalyst. Such compounds include particularly alkali metals, alkaline earth metals, nitrogen-containing compounds, metal compounds such as tin, and the like.

Organic acid salts, inorganic acid salts, oxides, hydroxides, hydrides or alkoxides of alkali metals and alkaline earth metals, quaternary ammonium hydroxide and salts thereof, amines, and the like are preferably used. Those compounds may be used singly or in combination.

Non-limiting examples of suitable alkali metal compound can include but not limited to sodium hydroxide, potassium hydroxide, cesium hydroxide, lithium hydroxide, sodium hydrogen carbonate, sodium carbonate, potassium carbonate, cesium carbonate, lithium carbonate, sodium acetate, potassium acetate, cesium acetate, lithium acetate, sodium stearate, potassium stearate, cesium stearate, lithium stearate, sodium hydrogen borate, phenylated boron-sodium, sodium benzoate, potassium benzoate, cesium benzoate, lithium benzoate, disodium hydrogen phosphate, dipotassium hydrogenphosphate, dilithium hydrogen phosphate, disodium phenyl phosphate, disodium salt, dipotassium salt, dicesium salt, and dilithium salt of bisphenol A, sodium salt, potassium salt, cesium salt and lithium salt of phenol, and the like.

As the alkaline earth metal compound, there can be used specifically magnesium hydroxide, calcium hydroxide, strontium hydroxide, barium hydroxide, magnesium hydrogen carbonate, calcium hydrogen carbonate, strontium hydrogen carbonate, barium hydrogen carbonate, magnesium acetate, calcium acetate, strontium acetate, barium acetate, magnesium stearate, calcium stearate, calcium benzoate, magnesium phenyl phosphate, and the like.

As the nitrogen-containing compounds, there can be used specifically ammonium hydroxides having alkyl, aryl, or araryl(alkaryl?) groups, such as tetramethylammonium hydroxide, tetraethylammonium hydroxide, tetrapropylammonium hydroxide, tetrabutylammonium hydroxide, and trimethylbenzylammonium hydroxide, tertiary amines such as triethylamine, dimethylbenzylamine and triphenylamine, secondary amines such as diethylamine and dibutylamine, primary amines such as propylamine and butylamine, imidazoles such as 2-methylimidazole and 2-phenylimidazole, ammonia, basic salts such as tetramethylammonium borohydride, tetrabutylammonium tetraphenylborate and tetraphenylammonium tetraphenylborate, or the like.

Further, as the alkali metal compounds, alkali metal salts of ate complexes of the group 14 element of the periodic table or alkali salts of oxo acid of the group 14 element of the periodic table can be used. Here, the group 14 element of the periodic table refers to silicone, germanium and tin.

Specifically the alkali metal salts of ate complexes of the group 14 element of the periodic table include germanium compounds such as NaGe(OMe)₆ and NaGe(OEt)₃, and tin compounds such as NaSn(OMe)₃ and NaSn(OMe)₂(OEt). The alkali salts of oxo acids of the group 14 element of the periodic table include monosodium orthosilicate, disodium monostannate, monosodium germanate, and the like.

Those catalysts are used in amounts of 10⁻⁹ to 10⁻³ mol, preferably 10⁻⁷ to 10⁻⁵ mol, per 1 mol in total of the aromatic dihydroxy compound and the aliphatic dihydroxy compound.

The ester interchange reaction concerned in the present invention can be performed by a known melt polycondensation method. That is, melt polycondensation is performed by an ester interchange reaction with the above-mentioned starting materials and catalyst by heating under atmospheric pressure or under reduced pressure while removing by-products. The reaction is generally performed in a multistage process of two or more stages.

Specifically, a first stage reaction is made to proceed at a temperature of 120 to 260°C, preferably 180 to 240°C, for 0 to 5 hours, preferably 0.5 to 3 hours. Then, while increasing the degree of pressure reduction in the reaction system and elevating the reaction temperature, the reaction among the aromatic dihydroxy compound and the aliphatic dihydroxy compound and the carbonic acid diester is performed and a polycondensation reaction is performed finally under a reduced pressure of 1 mmHg or less at a temperature of 200 to 300°c. Such a reaction may be performed by a continuous method or a batch method. A reaction apparatus used for carrying out the above-mentioned reaction may be a reaction tank or an extruder-type reactor, or a horizontal reactor equipped with a stirring blade having excellent surface renewal properties, such as a paddle, a gate paddle, a spectacle blade, or the like.

After completion of the polymerization, it is preferable that the catalyst in the resulting polycarbonate, the product of the present invention, be removed or deactivated to secure stability of the polymer against heat and hydrolysis. A method of deactivation of the catalyst for ester interchange such as an alkali metal or alkaline earth metal is preferably effected by addition of a known acidic substance.

Specific examples of such substances that can be suitably used include aromatic sulfonic acids, such as p-toluenesulfonic acid; aromatic sulfonic acid esters such as butyl p-toluenesulfonate and hexyl p-toluenesulfonate; organic acid halides such as stearyl chloride, butyryl chloride, benzoyl chloride, and p-toluenesulfonyl chloride; alkyl sulfates such as dimethyl sulfate; organic halides such as benzyl chloride; inorganic acids such as boric acid, phosphoric acid, and phosphorous acid; and the like.

In addition, phosphonium salts such as tetrabutylphosphonium octylsulfonate and tetrabutylphosphonium benzenesulfonate; ammonium salts such as tetrabutylammonium dodecylbenzylsulfate and tetramethylammonium dodecylbenzylsulfate; or the like may be suitably used.

The catalyst deactivation can be followed by removal of low-boiling compounds from the resulting polymer by gasifying at 200 to 300°C under a pressure of 0.1 to 1 mmHg. A horizontal reactor equipped with a stirring blade having excellent surface renewal properties, such as a paddle, a gate paddle, a spectacle blade, or the like or a thin film evaporator is suitable for this purpose.

It is desirable that stabilizers other than the various known phosphorus antioxidants be also added as appropriate to the resin in a molten state after the reaction. Such stabilizers include, for example, sulfur-containing acidic compounds or derivatives formed from the acidic compounds, phenol stabilizers, thioether stabilizers, hindered amine stabilizers, epoxy stabilizers, and the like. These stabilizers may be used singly or in combination.

Further, in the present invention, in addition to the above-mentioned ultraviolet absorbent, heat stabilizer and hydrolysis stabilizer, there may be added antioxidants, pigments, dyes, strengthening agents or fillers, slip agents, parting agents, nucleating agents, plasticizers, flow modifiers, antistatics, and so forth.

The components of the various kinds of additive including the above-mentioned ultraviolet absorbents and phosphorus antioxidants can be mixed into the polycarbonate resin by a hitherto known method. A method in which these additives are directly mixed into the molten resin after completion of the polymerization in a vertical or horizontal type tank reactor or extruder and pelletized after cooling is suitably used. Also, a method in which the molten resin after completion of the polymerization is once cooled and pelletized and the respective components dispersively mixed thereafter in a high-speed mixer, typified by a tumbling mixer, a Henschel mixer, a ribbon blender or a super mixer and melt-kneaded in an extruder, a Banbury mixer, a roll, or the like is selected as appropriate.

### Examples

Hereinafter, the present invention will be described in greater detail with reference to examples and comparative examples. However, the present invention is by no means limited by the following examples. Note that the obtained polycarbonate resin compositions were evaluated by the following methods.

Molecular weight: Measured by gel-permeation chromatography (Shodex GPC system 11) as polystyrene-converted molecular weight (weight average molecular weight: Mw). Chloroform was used as a developing solvent.

Molding of test pieces: Moldings were obtained by using SAV-40-50-CP manufactured by Sanjo Seiki Co., Ltd.

Hue (YI): A disk test piece of 50 mmφ and 3 mm thick was prepared and its YI (yellow index) was measured on a color difference meter (TC-1800 MK2, manufactured by Tokyo Seiki Co., Ltd.

Ultraviolet transmission: A disk test piece of 50 mmφ and 3 mm thick was prepared and its transmission at 380 nm was measured on an absorptiometer (UVmini 1240, manufactured by Shimadzu Corporation).

Tg: Measured on a differential scanning calorimeter DSC-60A manufactured by Shimadzu Corporation.

### (Synthesis Example)

In a 50-liter reaction vessel equipped with a stirrer and a distillator were charged 6038.1 g (22.5 mol) of BPZ, 4416.5 g (22.5 mol) of TCDDM, 10832.5 g (47.25 mol) of diphenyl carbonate, 0.0113 g (1.35 × 10⁻⁴ mol) of sodium hydrogen carbonate, and the mixture was heated to 200°C under a nitrogen atmosphere and stirred for 30 minutes. Thereafter, the degree of reduced pressure was adjusted to 150 mmHg and the temperature was raised up to 240°C to conduct ester interchange reaction while removing by-produced phenol. At the point in time when distillation of phenol was substantially completed, the degree of vacuum was further increased and stirring was carried out for an additional two hours under the condition of 1 mmHg or less. After completion of the reaction, nitrogen was blown into the reactor until atmospheric pressure was reached, and the produced polycarbonate was taken out. Thus, a resin was obtained that had a molar ratio of the structural unit derived from BPZ to the structural unit derived from TCDDM of 50:50 and that had physical properties of Mw = 58,300, refractive index nD = 1.58, Abbe number = 39, and Tg = 123°C.

### (Example 1)

0.0007 part by weight of n-butyl p-toluenesulfonate as a catalyst deactivator, 0.1 part by weight of 2-(2'-hydroxy-5'-t-octylphenyl)benzotriazole (Ciba Specialty Chemicals, Inc.; trade name, Tinuvin 329) as an ultraviolet absorbent, 0.05 part by weight of tris(2, 4-di-t-butylphenyl) phosphite (Asahi Denka Co., Ltd.; trade name, A-2112) as an antioxidant per 100 parts by weight of the polycarbonate resin obtained in the Synthesis Example were kneaded in a twin-screw extruder (barrel temperature 240°C) to obtain a polycarbonate resin composition. The resin composition was molded under ordinary conditions in an injection molding machine at a cylinder temperature of 250°C and a molding cycle of 60 seconds to obtain an injection molded test piece (50 mmφ, 3 mm thick). The test piece had an ultraviolet transmission at 380 nm of 0.7%, a YI value of 3.30, and a molecular weight, Mw, of 55,200. Also, after the resin composition was retained in the inside of the cylinder (250°C) of the injection molding machine for 30 minutes, it was molded into an injection molded test piece (50 mmφ, 3 mm thick), which had an YI value of 4.12 without aggravation of hue and Mw of 54,500, thus indicating a good retention of molecular weight, Mw, of 98.7%.

### (Examples 2 to 6 and Comparative Examples 1 and 2)

Polycarbonates were produced in the same manner as in Example 1 except that the kind and amount of the additive were changed as shown in Table 1, and the physical properties thereof were evaluated. The results of evaluation are shown in Table 1.

Note that the ultraviolet absorbents and phosphorus antioxidants shown in Table 1 were as follows:

### Ultraviolet absorbent

A: 2-(2'-Hydroxy-5'-t-octylphenyl)benzotriazole (trade name, Tinuvin 329)
B: 2-[2-Hydroxy-3,5-bis(α,α'-dimethylbenzyl)phenyl]-2H-benzotriazole (trade name, Tinuvin 234): manufactured by Ciba Specialty Chemicals, Inc.
C: 2,2'-Methylenebis[4-(1,1,3,3,-tetrametylbutyl)-6-(2H-benzotriazol-2-yl)phenol] (tradename, LA-31): manufactured by Asahi Denka Co., Ltd.

### Phosphorus antioxidant

a: Tris(2,4-di-t-butylphenyl) phosphite (A2112)
b: Bis(2,6-di-t-butyl-4-methylphenyl) pentaerythritol diphosphite (trade name, PEP-36): manufactured by Asahi Denka Co., Ltd.
c: 2,2-Methylenebis(4,6-dimethylphenyl) octyl phosphite (trade name, HP-10): manufactured by Asahi Denka Co., Ltd.

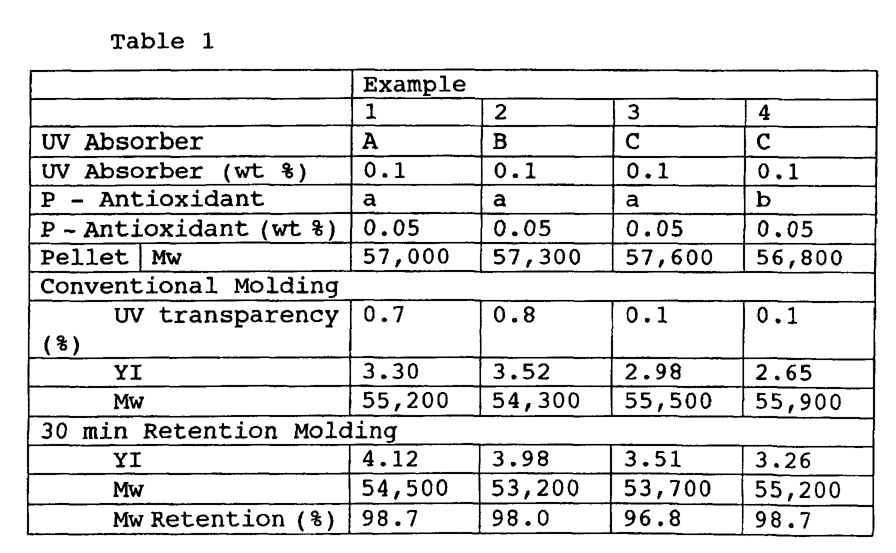

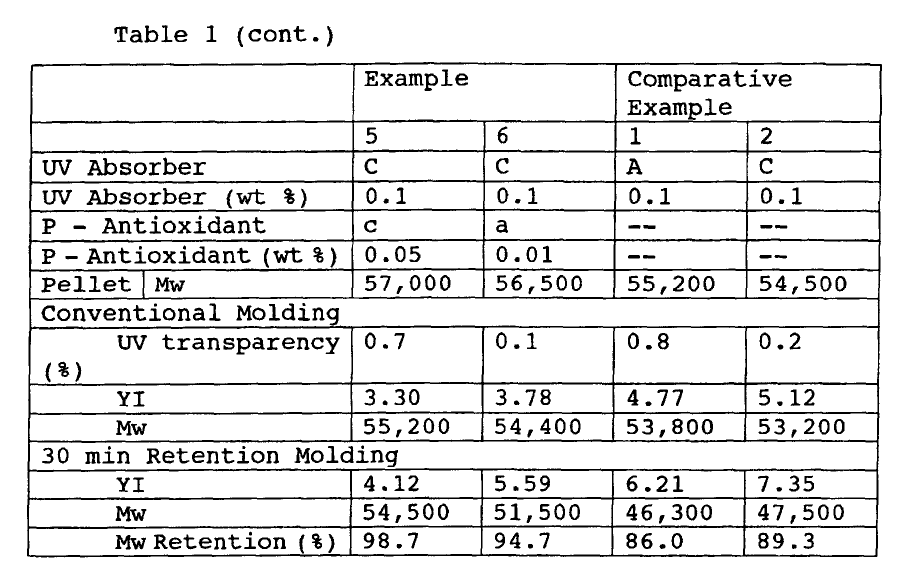

### Industrial Applicability

The polycarbonate resin of the present invention has improved refractive index, balance of dispersion, photoelastic constant, and so on while maintaining the characteristics of polycarbonate, such as excellent impact resistance and heat resistance, and hence it can be suitably used as a plastic optical material for various lenses, prisms, optical disk substrates, and the like.

## Claims

1. An aromatic-aliphatic copolycarbonate resin composition comprising 100 parts by weight of an aromatic-aliphatic copolycarbonate, 0.001 to 0.5 part by weight of a benzotriazole ultraviolet absorbent, and 0.005 to 0.1 part by weight of at least one of phosphorus antioxidants represented by the following formulae (1) to (3) 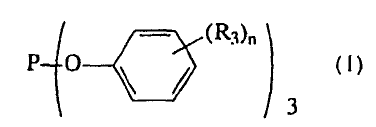 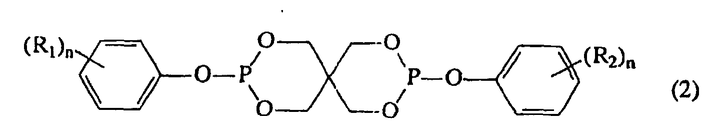 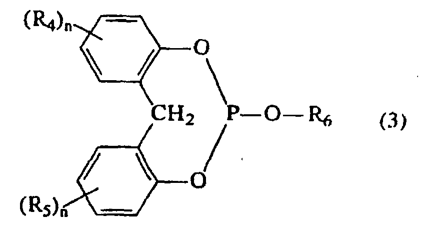 (wherein R₁ to R₆ represent a hydrogen atom, an alkyl group having 1 to 18 carbon atoms, or an oxyalkyl group having 1 to 18 carbon atoms, provided that R₁ to R₆ may be the same or different; and n represents the number of substituents and is an integer of 0 to 4).

2. An aromatic-aliphatic copolycarbonate resin composition according to claim 1, wherein the aromatic-aliphatic copolycarbonate resin is one that is obtained by polymerizing an aromatic dihydroxy compound represented by the following formula (4) and an aliphatic dihydroxy compound represented by the following formula (5) by an ester interchange method in the presence of a basic compound or an ester interchange catalyst 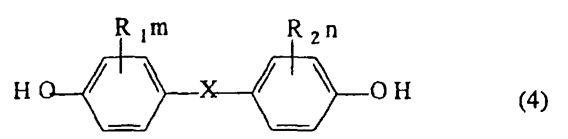 (wherein X is a single bond or 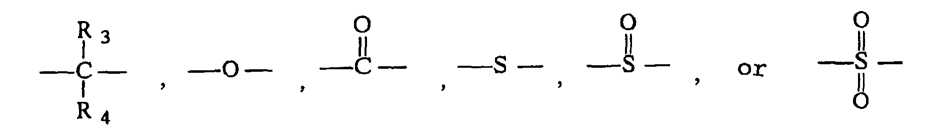 where R₃ and R₄ represent a hydrogen atom, an alkyl group having 1 to 10 carbon atoms or a phenyl group, provided that R₃ and R₄ may combine to form a ring; R₁ and R₂ represent a hydrogen atom, an alkyl group having 1 to 10 carbon atoms, or a halogen, provided that R₁ and R₂ may be the same or different; and m and n represent the number of substituents and are an integer of 0 to 4).

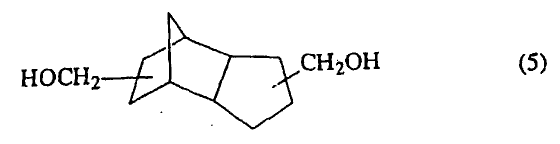

3. An aromatic-aliphatic copolycarbonate resin composition according to claim 1, wherein the aromatic dihydroxy compound is 1,1-bis(4-hydroxyphenyl)cyclohexane.

4. An aromatic-aliphatic copolycarbonate resin composition according to claim 1, wherein the benzotriazole ultraviolet absorbent is a compound having two or more benzotriazole skeletons.
